# EUROPÄISCHE PATENTSCHRIFT

(11) **EP 3 763 187 B1**
(45) Veröffentlichungstag und Bekanntmachung des Hinweises auf die Patenterteilung: **23.02.2022**
(21) Anmeldenummer: 20401040.9
(22) Anmeldetag: 02.07.2020
(51) Int. Cl.: A01C 15/00, A01C 7/08

(54) **LANDWIRTSCHAFTLICHE VERTEILMASCHINE MIT RÜHREINRICHTUNG**
AGRICULTURAL SPREADER WITH STIRRING DEVICE
MACHINE D'ÉPANDAGE AGRICOLE DOTÉE D'UN DISPOSITIF D'AGITATION

(30) Priorität: 12.07.2019 DE 102019118900
(43) Veröffentlichungstag der Anmeldung: 13.01.2021
(73) Patentinhaber: Amazonen-Werke H. Dreyer SE & Co. KG, 49205 Hasbergen (DE)
(72) Erfinder: Lübben, Jan-Eike, 26188 Edewecht (DE); Arnold, Roland, 27777 Ganderkesee (DE)

(56) Entgegenhaltungen:
- DE-A1-102016 122 552
- GB-A- 748 654
- US-A- 711 996
- US-A1- 2009 050 035

## Beschreibung

Die Erfindung betrifft eine landwirtschaftliche Verteilmaschine gemäß dem Oberbegriff des Patentanspruches 1.

In einer Vielzahl von Anwendungsfällen, insbesondere in der Landwirtschaft, werden Verteilmaschinen zum Ausbringen von granularem Material eingesetzt. Bei dem granularen Material kann es sich insbesondere um Saatgut- und/oder Düngemittel handeln. Typischerweise weist eine Verteilmaschine zur Bevorratung des granulären Materials einen Vorratsbehälter mit zumindest einem Auslaufbereich auf. Darüber hinaus ist im Bereich des Vorratsbehälters, insbesondere im Bereich des Auslaufbereiches, zumindest ein Dosierorgan zum Dosieren des auszubringenden Materials vorhanden. Ausgehend vom Dosierorgan wird das auszubringende Material beispielsweise über Förderleitungen hin zu Ausbringelementen, wie beispielsweise einem Schar und/oder einer Streuscheibe geleitet. Je nach dem wird das auszubringende Material auf der landwirtschaftlichen Fläche und/oder einer Fahrbahn über ein Schar abgelegt und/oder ausgehend von der Streuscheibe in Form eines Streufächers verteilt.

Aufgrund von unterschiedlichen Stoffeigenschaften des auszubringenden Materials und/oder bedingt durch äußerliche Einflüsse, insbesondere der Luftfeuchtigkeit der Umgebung, kann dies zu einem Verklumpen des granularen Materials und somit zu Verstopfungen, insbesondere im Auslaufbereich des Vorratsbehälters, führen. Um die Entstehung derartiger Verklumpungen bzw. Agglomerationen zu vermeiden und/oder durch Auflockerung zu lösen weisen Verteilmaschinen typischerweise Rühreinrichtungen auf, die das bevorratete Material innerhalb des Vorratsbehälters umrühren.

Eine derartige Verteilmaschine ist in der DE 10 2016 122 552 A1 beschrieben. Die innerhalb des Vorratsbehälters angeordnete Rühreinrichtung umfasst hierbei eine rotatorisch angetriebene Rührwelle. Entlang der Rührwelle sind eine Vielzahl von als scheibenförmig ausgebildeten Rührelementen aufgebracht, die mit der Rührwelle drehfest gekoppelt sind. Die Rührwirkung wird mittels an den Rührelementen angeformten Formelementen erzielt, die bei Drehung der Rühreinrichtung durch das granulare Material streichen.

In einigen Situationen ist es erforderlich einzelne Rührelemente auszutauschen bzw. von der Rührwelle zu demontieren. Dies kann beispielsweise bei einem Defekt eines Rührelementes der Fall sein oder einer Anpassung der Anzahl an verwendeten Rührelementen aufgrund von variierendem auszubringenden Material mit abweichenden Stoffeigenschaften. Die in der DE 10 2016 122 552 A1 als einteilig ausgeführten Rührelemente weisen jedoch den Nachteil auf, dass diese aufwendig über eines der Enden der Rührwelle nach deren Ausbau auf- bzw. heruntergeschoben werden müssen. Dies wiederrum bedingt eine zumindest teilweise Demontage der Rührwelle aus einer Lagerung der Welle und/oder dem Vorratsbehälter.

Da die Rührelemente typischerweise mittels Bolzen- und/oder Schraubverbindungen an der Rührwelle befestigt sind, wie beispielsweise in der GB 748 654 A oder der DE 10 2016 122552 A1 beschrieben, müssen diese mithilfe eines Werkzeuges von der Rührwelle gelöst bzw. an dieser befestigt werden.

Aus der DE 30 34 216 A1 ist eine Sämaschine mit einer Walze und daran angeordneten Packerringen bekannt, wobei ein Packerring jeweils aus mehreren Ringsektoren zusammengesetzt ist. Ein erstes Ende eines Ringsegktors wird hierbei in ein zweites Ende eines anderen Ringsektors gesteckt und mittels einer Schraubverbindung an der Walze befestigt. Somit sind im Bereich der Sätechnik in Kombination mit der Bodenbearbeitung sektorförmige Aufbauten von aufgesetzten Ringen auf Walzen bekannt.

Auch ist es durch die US 2009/050035 A1 bekannt, im Bereich der Sätechnik mehrteilige Vereinzelungselemente einzusetzen.

In der DE 20 2004 010 697 U1 werden sogenannte Arbeitsringe, die aus gleichartigen Ringsektoren zusammengesetzt sind, auf einer Ackerwalze befestigt. Ein erstes Ende eines Ringsektors wird hier mit einem zweiten Ende eines anderen Ringsektors mittels einer Schraubverbindung miteinander gekoppelt und gleichzeitig auf die Walze aufgesetzt.

In der DE 1 457 836 A1 ist ein ringförmiges Führungsglied um einen Streuteller umschließbar ausgebildet. Das Führungsglied ist aus zwei gleichförmigen Halbschalen gebildet, wobei ein Ende einer Halbschale mit einem Ende einer anderen Halbschale über ein Gelenk miteinander verbunden ist. Das Führungsglied ist somit klappbar ausgebildet. Zur Montage bzw. Demontage des Führungsgliedes um den Streuteller kann das Führungsglied somit auf- bzw. zugeklappt werden. Somit sind im Bereich der Sämaschinen klappbare Halbschalen bekannt.

In der US 6 588 191 B2 wird ein Mähgerät mit einem Schneidwerk beschrieben. Das Schneidwerk weist hierbei unter anderem eine gerillte Schneidwalze auf, an der mehrere Ringhälften innerhalb der Rillen aufgebracht werden können. Diese sind in einem verbauten Zustand der Walze montier- bzw. demontierbar. Ein vollständiger Ring wird hierbei aus zwei Ringhälften, die mittels Schraubverbindung miteinander verbunden sind, gebildet. Zur Anpassung des Bearbeitungsbereiches sind die Ringhälften je nach Bedarf auf der Welle in einem verbauten Zustand der Walze montierbar.

Die der Erfindung zugrunde liegende Aufgabe besteht somit darin, eine Rühreinrichtung mit zumindest einem Rührelement so zu gestalten, dass das zumindest eine Rührelement für einen Bediener besonders einfach montierbar ist.

Diese Aufgabe wird gelöst durch eine Verteilmaschine mit den Merkmalen gemäß Anspruch 1.

Infolge einer mehrteiligen, vorzugsweise zweiteiligen, Ausgestaltung des Rührelementes, ist die Rührwirkung der Rühreinrichtung, abhängig vom vorherrschenden Anwendungsfall, auf den erforderlichen Bedarf besonders einfach anpassbar. Je nach Eigenschaft des zu verteilenden Materials ist eine Verringerung oder Steigerung der Anzahl an Rührelementen auf der Rührwelle erforderlich. Dies setzt voraus, dass die Verteilmaschine möglichst kurzfristig durch den Bediener auf die jeweilige Situation umrüstbar ist. Hierunter ist außerdem das Austauschen einer ersten Ausführungsform des Rührelementes auf eine andere zweite Ausführungsform zu verstehen. Somit ist kann es vorteilhaft sein wenn beispielsweise bei Feinsämerein andere Formen des Rührelementes vorteilhaft sind und somit von dem Bediener kurzfristig umrüstbar sind. Darüber hinaus kann hierunter außerdem ein erforderlicher Austausch der einzelnen Rührelemente aufgrund von Verschleiß und/oder Beschädigungen verstanden werden. Die mehrteilige Ausführungsform ermöglicht hierbei das Lösen oder Montieren des Rührelementes, ohne eine erforderliche Demontage der Rührwelle. Ein Aufschieben bzw. Abziehen der Rührelemente entlang der Längsachse der Rührwelle ist somit nicht notwendig. Erfindungsgemäß ist das Aufbringen der Rührelemente über dem Umfang der Rührwelle in einem verbauten Zustand der Rührwelle ermöglicht. Das Rührelement kann hierbei zumindest teilweise, vorzugsweise vollständig, die Rührwelle umschließend ausgebildet sein. Eine vollständig durch das Rührelement umschlossene Rührwelle hat den Vorteil, dass hierdurch Schmutzkanten, auf denen sich Material ablagern kann, vermieden werden. Somit wird infolge dieser Ausgestaltung ein geringerer Verschmutzungsgrad innerhalb des Vorratsbehälters, insbesondere der Rühreinrichtung, erreicht und dadurch weitere Rüst- bzw. Reinigungszeit eingespart. Darüber hinaus ist durch eine geringere Anzahl an Kanten ein hoher Sicherheitsgrad für den Bediener erreicht. Es ist denkbar, das bei einem Eingreifen des Bedieners die Rühreinrichtung noch rotiert und mit zumindest einem der Gliedmaßen des Bedieners in Kontakt kommen kann.

Wie zuvor beschrieben, sind Lösungen für Sä- und/oder Bodenbearbeitungsmaschinen im Stand der Technik bekannt, bei denen sektorförmig, insbesondere kreisringsektorförmig, und/oder klappbar aufgebaute Komponenten eingesetzt werden. Die Übertragung dieses Prinzips in den Bereich von Rühreinrichtungen wurde bisher jedoch als problematisch betrachtet. Die vorliegende Erfindung erlaubt folglich eine Anwendung der aus dem Stand der Technik bekannten Merkmale im Bereich der Verteilmaschinen, insbesondere Verteilmaschinen mit Rühreinrichtungen.

In vorteilhafter Weise ist das Rührelement in dieser Ausführungsform bevorzugt scheibenförmig ausgebildet. Der Außenradius und/oder die äußeren Abmessungen des Umfangs des scheibenförmig ausgebildeten Rührelementes weisen hierbei ein Vielfaches der Dicke des Rührelementes auf. Darüber hinaus ist eine zylindrische Grundform des Rührelementes denkbar, bei der sich das Rührelement entlang der Längsachse der Rührwelle erstreckt. Die Dicke des Rührelementes kann hierbei der Größe des Außenradius und/oder den äußeren Abmessungen des Umfangs entsprechen oder größer sein.

Das Rührelement kann erfindungsgemäß aus Metall und/oder Kunststoff bestehen. Die Fertigung des Rührelementes aus anderen Materialien wie beispielsweise weiteren Nichtmetallen und/oder Naturstoffen ist jedoch ebenso denkbar. Unter den Nichtmetallen können des Weiteren Werkstoffe wie beispielsweise Keramik, Glas und der gleichen verstanden werden. Bei den Naturstoffen kann es sich beispielsweise um ein Holzmaterial handeln.

Erfindungsgemäß ist das Rührelement aus mehreren sektorförmigen, vorzugsweise kreisringsektorförmigen, Abschnitten ausgebildet. Durch den sektorförmigen Aufbau ist das Rührelement aus den einzelnen Teilen zu einer Gesamtheit des Rührelementes zusammensetzbar. Der sektorförmige Aufbau erlaubt somit ein aufeinanderfolgendes Aufsetzen der einzelnen Abschnitte auf die Rührwelle. Insbesondere bei einem kreisringsektorförmigen Abschnitt wird ein einzelner Abschnitt von einem äußeren Kreisbogen und zwei Kreisradien begrenzt. Ein von den beiden Kreisradien eingeschlossener Winkel ist hierbei bevorzugt so gewählt, dass die Rührwelle von einem Abschnitt des Rührelementes soweit umschlossen wird, dass der sektorförmige Abschnitt auf die Rührwelle aufgesetzt und/oder abgenommen werden kann. Eine vorteilhafte Unterteilung der Abschnitte kann beispielsweise durch die Aufteilung des Rührelementes entlang zumindest einer Symmetrieachse erreicht werden.

Bei einer weiteren bevorzugten Ausführungsform ist zumindest ein Ende eines ersten sektorförmigen Abschnittes mit zumindest einem Ende eines zweiten sektorförmigen Abschnittes zumindest teilweise zu der Bildung des Rührelementes verbunden. Infolge dieser Maßnahme ist vor allem die Bereitstellung und/oder die Handhabung während der Montage des Rührelementes erheblich vereinfacht. Die einzelnen Abschnitte des Rührelementes sind hierdurch stets passend mit den zugehörigen anderen Abschnitten des Rührelementes fest verbunden. Darüber hinaus bietet sich hierdurch der Vorteil, dass nur einer der sektorförmigen Abschnitte kraftübertragend mit der Rührwelle verbunden werden muss. Die Übertragung der Rotation auf zumindest einen weiteren Abschnitt ist hierbei mittels der Verbindung zwischen den sektorförmigen Abschnitten erreicht.

Bei einer weiteren besonders bevorzugten Ausführungsform der erfindungsgemäßen Rühreinrichtung ist zur Bildung des Rührelementes zumindest einer der sektorförmigen Abschnitte scharnierartig mit zumindest einem anderen sektorförmigen Abschnitt verbunden. Die scharnierartige Verbindung kann hierbei beispielsweise als ein um eine Achse rotierendes Gelenk und/oder als ein flexibles Filmscharnier ausgebildet sein. Aufgrund der scharnierartigen Verbindung und der daraus folgenden geführten rotatorischen Verschwenkung der einzelnen Abschnitte zueinander ist eine besonders vereinfachte Handhabung des Rührelementes während der Montage erzielt.

Erfindungsgemäß weist zumindest ein sektorförmiger Abschnitt zumindest in einem seiner Endbereiche zumindest einen flexiblen und einem anderen sektorförmigen Abschnitt zusammenwirkenden Rasthaken auf. Der zumindest eine Rasthaken eines sektorförmigen Abschnittes ist dazu eingerichtet, mit zumindest einem Halteelement eines anderen sektorförmigen Abschnittes zu verrasten. Der daraus resultierende Rastmechanismus ist bevorzugt reversibel und insbesondere zerstörungsfrei lösbar ausgebildet. Diese Ausführungsform kann dadurch vorteilhaft weitergebildet werden, wenn das Verschließen und/oder das Lösen der Verrastung werkzeuglos erfolgt. Hierdurch entfällt das Vorhalten von zusätzlichen Werkzeugen für die Montage der Rührelemente während des Säens.

In einer besonders bevorzugten Ausführungsform weist zumindest einer der sektorförmigen Abschnitte, die das Rührelement bilden, zumindest ein Fixierelement auf. Hierbei ist ein erstes Ende des Fixierelementes lösbar oder vorzugsweise fest mit zumindest einem der sektorförmigen Abschnitte verbunden. Das Fixierelement ist bevorzugt an zumindest einem der Abschnitte angeformt oder andersartig befestigt. Unter einer andersartigen Befestigung kann hierbei beispielsweise eine stoffschlüssige und/oder eine kraft- und/oder eine formschlüssige Verbindung verstanden werden. Das Fixierelement weist vorzugsweise zumindest einen Schlitz auf, der sich beispielsweise von einem zweiten Ende des Fixierelementes entlang der Längsachse des Fixierelementes erstreckt. Der Schlitz kann sich nur zum Teil oder vorzugsweise durchgängig durch das Fixierelement erstrecken. Das Fixierelement ist somit dazu eingerichtet, durch das wirken einer Äußeren Kraft, die auf einer Umfangsfläche des Fixierelementes angreift, den Außenradius zumindest teilweise zu verkleinern. Diese Ausgestaltung bietet den Vorteil, dass ein Befestigungsmittel zum Verbinden des Rührelementes an der Rührwelle, erfindungsgemäß als Fixierelement ausgestaltet, bereits vor der eigentlichen Montage am Rührelement vorhanden ist.

In einer besonders bevorzugten Weiterbildung weist der sektorförmige Abschnitt zumindest ein erstes und ein zweites Ende auf, wobei das Fixierelement mittig zwischen dem ersten und dem zweiten Ende angeordnet ist. Das Fixierelement ist hierbei vorzugsweise senkrecht zur Längsachse der Rührwelle ausgerichtet. Infolge der mittig angeordneten Positionierung des Fixierelementes ist ein Kraftangriffspunkt der Verbindung zwischen Rührwelle und Rührelement erreicht der sich besonders nah am Massenschwerpunkt des Rührelementes befindet. Hierdurch ist ein besonders günstiges Verhältnis der Hebellängen des Kraftangriffspunktes zwischen Rührwelle und Rührelement und dem Massenschwerpunkt zumindest eines sektorförmigen Abschnittes erreicht. Dies wiederrum wirkt sich positiv auf die rotierende Unwucht des Rührelementes aus, als auch auf die angreifenden Biegemomente.

In einer weiteren durchaus bevorzugten Ausführungsform weist das Rührelement zumindest ein Fixierelement und die Rührwelle zumindest eine Bohrung auf, wobei das Fixierelement und die Bohrung derartig ausgebildet sind, dass das Fixierelement in die Bohrung einsteckbar ist. Das Fixierelement ist hierbei vorzugsweise lösbar mittels einer form- und/oder kraftschlüssigen Verbindung mit der Rührwelle gekoppelt. Hierzu ist der Außendurchmesser der Bohrung kleiner als der Außendurchmesser des Fixierelementes. Durch das Einstecken des Fixierelementes in die Bohrung, wird das Fixierelement aufgrund des ausgebildeten Schlitzes und der am Umfang angreifenden Kraft soweit komprimiert, dass das Fixierelement in die Bohrung einführbar ist. Der durch die Bohrung bereits durchgesteckte Teil des Fixierelementes weitet sich wieder bis zu seinen ursprünglichen Abmessungen aus, so dass dieser Teil innerhalb der Bohrung verklemmt. Erst nach Überwindung einer definierten Kraft, die durch das Verhältnis des Außendurchmessers des Fixierelementes und der Bohrung der Rührwelle bestimmt ist, kann das Rührelement von der Rührwelle gelöst werden. Das Verhältnis der Abmessungen ist hierbei vorzugsweise so gewählt, dass das Lösen des Rührelementes werkzeuglos erfolgen kann. Darüber hinaus hat auch die Materialwahl der Rührwelle und/oder des Rührelementes Einfluss auf die Kraft, die zum Lösen der Verbindung erforderlich ist. Dies bietet den Vorteil, dass der Bediener keine zusätzlichen Werkzeuge zum Austauschen der Rührelemente mitführen muss. Somit ist insbesondere eine kurzfristige Umrüstung der Rühreinrichtung erreicht.

Zum Erzielen der eigentlichen Rührwirkung der Rühreinrichtung ist die Rührwelle gleichmäßig und/oder intermittierend rotierend angetrieben. Die direkte und vorzugsweise starre Verbindung des Rührelementes mittels des zumindest einen Fixierelementes an der zumindest einen Bohrung der Rührwelle ermöglicht des Weiteren eine nahezu verlustfreie Übertragung der Rotation der Rührwelle auf das Rührelement. Hiermit wird außerdem sichergestellt, dass das Rührelement stets in Abhängigkeit der Rührwelle rotiert.

In einer weiteren durchaus bevorzugten Weiterbildung weist das Rührelement zumindest ein axial, vorzugsweise seitlich, angeordnetes Formelement auf. Das Formelement ist hierbei lösbar oder vorzugsweise fest mit zumindest einem der sektorförmigen Abschnitte verbunden. Das Formelement kann bevorzugt an zumindest einem der Abschnitte angeformt und/oder andersartig befestigt sein. Unter einer andersartigen Befestigung kann hierbei beispielsweise eine stoffschlüssige und/oder eine kraft- und/oder eine formschlüssige Verbindung verstanden werden. Infolge der Rotation des Rühreinrichtung streicht das Rührelement und das zumindest eine Formelement durch das bevorratete Material und erzielt somit die erforderliche Rührwirkung. Neben der Rotationsgeschwindigkeit ist die Rührwirkung vor allem durch die Abmessungen und/oder der Beschaffenheit der Formelemente beeinflussbar.

In einer weiteren bevorzugten Ausführungsform der erfindungsgemäßen Rühreinrichtung weist das Rührelement zumindest einen Ausschnitt auf, wobei das Rührelement dazu eingerichtet ist, mittels des zumindest einen Ausschnittes ein Rührhilfsmittel aufzunehmen. Der zumindest eine Ausschnitt kann hierbei beispielsweise in einer geometrischen Grundform ausgebildet sein. Hierzu zählen unter anderem runde und/oder vorzugsweise polygonförmige Formen wie beispielsweise ein Sechseck. Das Rührhilfsmittel ist hierbei als ein Klammer-und/oder vorzugsweise als ein Stabelement ausgebildet das in den Ausschnitt des Rührelementes einschiebbar und/oder einsteckbar ist. Die Form des Rührhilfsmittels korrespondiert hierbei zumindest im Bereich der innerhalb des Ausschnittes des Rührelementes liegt mit der Form des Ausschnittes. Das Material, aus dem das Rührhilfsmittel besteht, kann hierbei ein Metall, ein Nichtmetall oder ein Naturstoff sein. Die Verbindung zwischen dem Rührhilfsmittel und dem Rührelement ist vorzugsweise zerstörungsfrei lösbar ausgebildet. Durch die Verwendung des Rührhilfsmittels lässt sich die Rührwirkung bei Bedarf beispielsweise bei Verstopfungs- und/oder Verklumpungsanfälligeren Materialien weiter steigern. Zu diesen Materialien zählen beispielsweise Feinsämerein, insbesondere Grassamen.

In einer weiteren bevorzugten Weiterbildung der erfindungsgemäßen Rühreinrichtung ist das Rührelement aus gleichartigen oder identischen Teilen gebildet. Gleichartig bedeutet hier, dass nur einzelne wenige Merkmale oder sich nur ein Merkmal der einzelnen Abschnitte unterscheidet. Beispielsweise kann dies bedeuten, dass nur ein sektorförmiger Abschnitt eines einzelnen Rührelementes ein Fixierelement aufweist. Eine identische Ausbildung der sektorförmigen Abschnitte bedeutet hingegen, dass sich die einzelnen Abschnitte in keinem einzigen Merkmal unterscheiden. Diese Ausführungsform hat den Vorteil, dass das Rührelement besonders kosten günstig herstellbar ist, da die Werkzeuge, die zur Herstellung der sektorförmigen Abschnitte dienen, nahezu gleich oder identisch sind. Des Weiteren hat die Ausbildung des Rührelementes aus identischen Teilen den Vorteil, dass eine mögliche Verwechslungsgefahr der einzelnen sektorförmigen Abschnitte insbesondere während der Montage erheblich reduziert ist.

Weitere Einzelheiten der Erfindung sind der Beispielsbeschreibung und den Zeichnungen zu entnehmen. Die Zeichnungen zeigen
- Fig.1: den Vorratsbehälter einer landwirtschaftlichen in einem seitlichen Querschnitt;
- Fig. 2: den Vorratsbehälter einer landwirtschaftlichen Verteilmaschine mit Dosierorganen und Rührwelle in perspektivischer Ansicht von schräg hinten;
- Fig. 3: die Rührwelle einer landwirtschaftlichen Verteilmaschine mit Rührelementen;
- Fig. 4a: die Rührwelle einer landwirtschaftlichen Verteilmaschine und ein geöffnetes Rührelement in Explosionsdarstellung;
- Fig. 4b: die Rührwelle einer landwirtschaftlichen Verteilmaschine mit einem daran verbauten geschlossenen Rührelement in perspektivischer Ansicht;
- Fig. 5: ein Rührelement mit daran angebrachten Rührhilfsmitteln in perspektivischer Ansicht; und
- Fig. 6: eine andere beispielhafte Ausführungsform des Rührelementes in perspektivischer Ansicht.

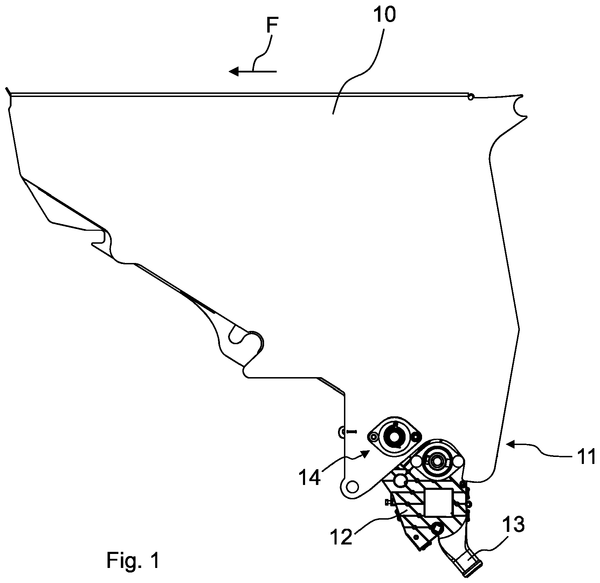

Ein Vorratsbehälter 10 einer landwirtschaftlichen Verteilmaschine zur Bevorratung von zu verteilendem Material ist in der Fig. 1 gezeigt. Der Vorratsbehälter 10 ist über ein nicht gezeigtes Rahmengestell mit der landwirtschaftlichen Verteilmaschine gekoppelt. Je nach Ausführungsform ist das Rahmengestell mitsamt des Vorratsbehälters 10 an einer landwirtschaftlichen Zugmaschine angebaut und/oder von dieser gezogen.

Im unteren Bereich des Vorratsbehälters 10 weist dieser einen verjüngenden Auslaufbereich 11 auf, der das zu verteilende Material zu einer Vielzahl von Dosierorganen 12, die unterhalb des Auslaufbereiches 11 angeordnet sind, führt. Die Dosierorgane 12 dienen hierbei der definierten Portionierung und Zuführung des zu verteilenden Materials in dafür vorgesehene Förderleitungen 13. Ausgehend von den Förderleitungen 13 wird das bevorratete Material von Ausbringelementen auf einer landwirtschaftlichen Fläche ausgebracht.

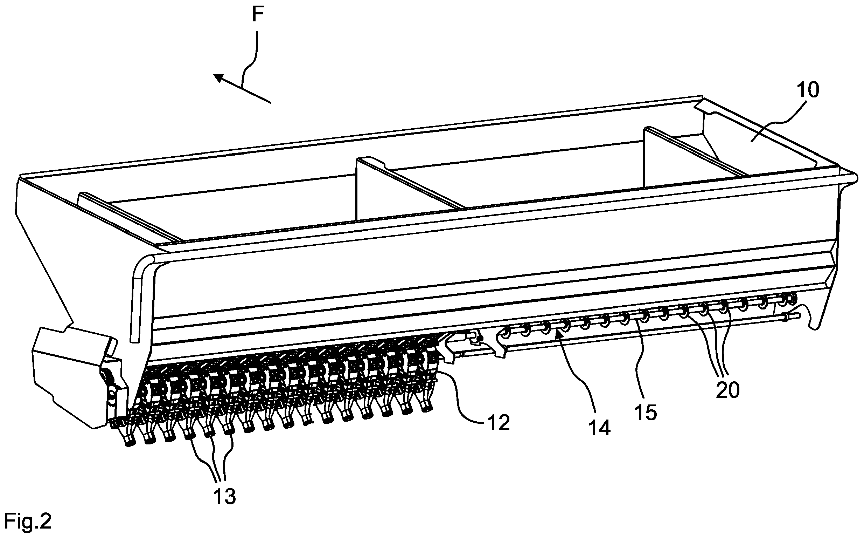

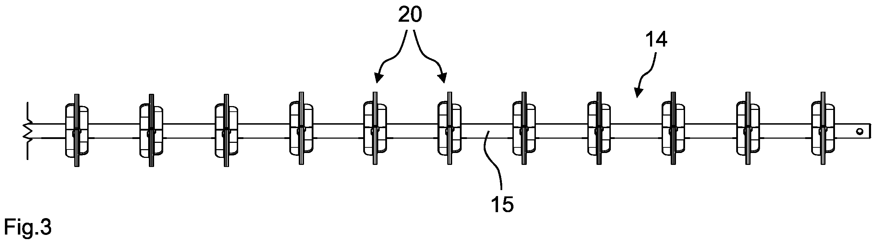

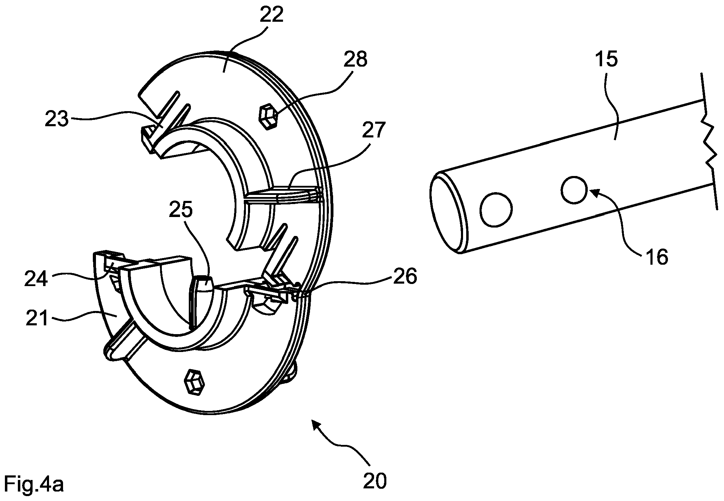

Wie in der Fig. 2 zu sehen ist, ist oberhalb der Dosierorgane 12 eine ebenfalls quer zur Fahrtrichtung F ausgerichtete Rührwelle 15 angeordnet. Die Rührwelle 15 ist von einem nicht gezeigten Aktor rotierend angetrieben. Zur Steigerung der Rührwirkung sind jeweils einem Dosierorgan 12 zugeordnete Rührelemente 20 drehfest an der Rührwelle 15 angeordnet. Die lösbar mit der Rührwelle 15 verbundenen Rührelemente 20 sind wie in der Fig. 3 gezeigt, axial zur Längsachse der Rührwelle 15 ausgerichtet. Die Verbindung zwischen der Rührwelle 15 und dem Rührelement 20 ist hierbei mittels einer Formschlussverbindung realisiert. Hierzu weist die Rührwelle 15 eine Bohrung 16 zum Einstecken eines an dem Rührelement 20 angeordneten Fixierelementes 25 auf, wie in der Fig. 4a zu sehen ist. Der Durchmesser der Bohrung 16 ist in diesem Beispiel kleiner ausgeführt als der entspannte Außendurchmesser des Fixierelementes 25. Das Fixierelement 25 ist durch einen mittig an diesem ausgebildeten Schlitz elastisch verformbar ausgeführt. Durch Einführung des Fixierelementes 25 in die dafür vorgesehene Bohrung 16 der Rührwelle 15 wird der Außendurchmesser des Fixierelementes 25, durch eine vom Bohrungsumfang auf das Fixierelement 25 übertragende Kraft während des Einführens, komprimiert. Im vollständig eingeführten Zustand weitet sich der Außendurchmesser des Fixierelementes 25 über den Durchmesser der Bohrung 16 auf, so dass die Formschlussverbindung somit erreicht ist. Alternativ hierzu sind auch andersartige Formschlussverbindungen, wie beispielsweise Welle-Nabe- und/oder Schnappschlussverbindungen, zur Fixierung des Rührelementes 20 auf der Rührwelle 15 denkbar.

Die lösbare Verbindung ist von Vorteil, wenn zumindest eines der Rührelemente 20 beispielsweise aufgrund einer Wartung und/oder einem Austausch infolge von Verschleiß oder einer Beschädigung erforderlich ist. Darüber hinaus kann die Anzahl der Rührelemente 20 auf einen notwendigen Bedarf, aufgrund variierender Materialeigenschaften des auszubringenden Materials somit kurzfristig angepasst werden. In vorteilhafter Weise ist die Formschlussverbindung derart ausgebildet, dass das Aufsetzen bzw. Lösen der Verbindung werkzeuglos möglich ist.

Zur Vermeidung von Verklumpungen und/oder Verstopfungen innerhalb des Vorratsbehälters 10, insbesondere im Bereich der Dosierorgane 12, streichen die jeweiligen auf der Rührwelle 15 befestigten Rührelemente 20 rotatorisch durch das bevorratete Material.

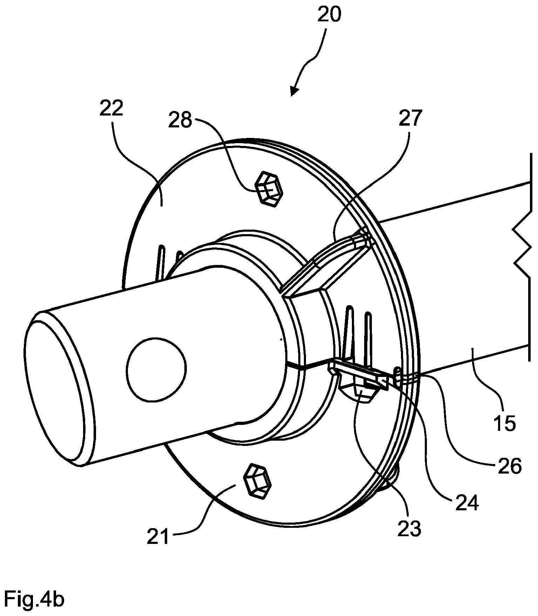

Wie in der Fig. 4a ebenfalls gut zu sehen, ist das Rührelement 20 zur Durchdringung des bevorrateten Materials scheibenförmig ausgebildet. Das Rührelement 20 weist einen mehrteiligen, aus kreisringsektorförmigen Abschnitten 21, 22 zusammengesetzten Aufbau auf, wobei die Rührwelle 15 wie in der Fig. 4b zu sehen ist, von dem Rührelement 20 im verbauten Zustand vollständig umschlossen ist. Alternativ hierzu ist denkbar, dass das Rührelement 20 derart ausgebildet ist, dass dieses die Rührwelle 15 nur teilweise umschließt. Eine über den Umfang vollständig umschlossene Rührwelle 15 bietet jedoch den Vorteil, dass hierdurch die Anzahl an Kanten an denen sich beispielsweise Materialreste ablagern können verringert wird.

Weiterhin ist insbesondere in der Fig. 4a zu sehen, dass die Abschnitte 21, 22 über die jeweiligen Enden zu der Bildung des Rührelementes 20 miteinander verbunden sind. In einer besonders betriebssicheren Variante, kann die Verbindung zwischen den Rührelementen 20, wie in dem dargestellten Ausführungsbeispiel in Fig. 4a - 4b, scharnierartig mittels beispielsweise einem flexiblen Filmscharnier 26 ausgebildet sein. Diese Ausführungsform bietet den Vorteil, dass für ein jeweiliges Rührelement 20 nur an einem der sektorförmigen Abschnitte 21, 22 ein Fixierelement 25 zum übertragen der Rotationsbewegung von der Rührwelle 15 auf das Rührelement 20 erforderlich ist. Eine besonders sichere Übertragung der Drehbewegung zwischen der Rührwelle 15 und dem Rührelement 20, wird durch ein wie in der Fig. 4a dargestellten mittig zwischen den beiden Enden des ersten sektorförmigen Abschnittes 21 angeordneten Fixierelementes 25 erreicht. Alternativ ist denkbar, dass das Fixierelement 25 zu einem der Enden versetzt angeordnet ist und/oder weitere Fixierelemente 25 an einem anderen sektorförmigen Abschnitt 22 abgeordnet sind.

Zur Bildung des scheibenförmigen Rührelementes 20 weisen die mehreren miteinander verbundenen sektorförmigen Abschnitte 21, 22 an ihren Endbereichen jeweils formschlüssig zusammenwirkende Rasthaken 23 und Halteelemente 24 auf. Über diese werden die einzelnen Abschnitte 21, 22 lösbar miteinander verbunden. Ein Rasthaken 23 des ersten sektorförmigen Abschnittes 21 ist hierbei einem zugehörigen Halteelement 24 des zweiten sektorförmigen Abschnittes 22 zugeordnet und derart ausgebildet, dass der Rasthaken 23 und das Halteelement 24 im verbauten Zustand miteinander verrasten. Alternativ zur dargestellten Ausführungsform ist denkbar, dass ein sektorförmiger Abschnitt 21, 22 jeweils zumindest einen Rasthaken 23 und zumindest ein Halteelemente 24 aufweist. Zur Verrastung und/oder zum Lösen der Verrastung ist der Rasthaken 23 flexibel ausgebildet.

Zur Erweiterung der Rührwirkung sind an dem rotatorisch angetriebenen Rührelement 20 axial bzw. seitlich angeordnete Formelemente 27 aufgebracht. Diese sind in Form von Erhebungen auf den Seitenfläche des Rührelementes 20 ausgebildet und über den Umfang des Rührelementes 20 verteilt. Hierbei ist denkbar die Anzahl der an den Rührelementen 20 ausgebildeten Formelemente 27 in Abhängigkeit der umzurührenden Materialien zu verringern oder zu steigern. Die Anzahl, Anordnung und/oder Form der Formelemente 27 ist hierbei nicht auf die beispielhaft dargestellte Ausführungsform beschränkt, sondern kann in Abhängigkeit der physikalischen Eigenschaften des auszubringenden Materials angepasst werden.

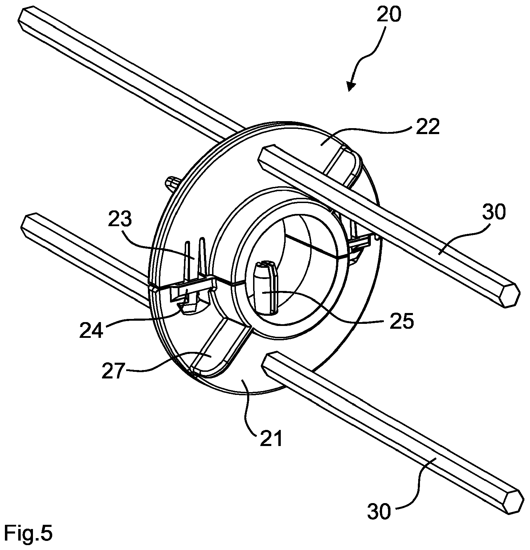

Außerdem ist in den Fig. 4a - 4b zu sehen, weist das Rührelement 20 polygonförmig ausgebildete Ausschnitte 28 auf. Alternativ können diese auch rund ausgebildet sein. Des Weiteren ist denkbar, dass die Ausschnitte 28 als nicht durchgängige Aussparungen an den Rührelement 20 ausgebildet sind. Die Ausschnitte 28 dienen der Aufnahme von Rührhilfsmitteln 30, wie in der Fig. 5 gezeigt. Die Rührhilfsmittel 30 sind in dem aufgeführten Beispiel stabförmig mit einer den Ausschnitten 28 korrespondierenden Grundform ausgebildet. Durch die Erweiterung der Rührelemente 20 mittels der beschriebenen Rührhilfsmittel 30, lässt sich insbesondere bei der Umrührung von Feinsämerein, wie beispielsweise Grassamen, die Rührwirkung steigern. Alternativ kann das Rührhilfsmittel 30 als Klammer und/oder drahtförmig ausgebildet sein.

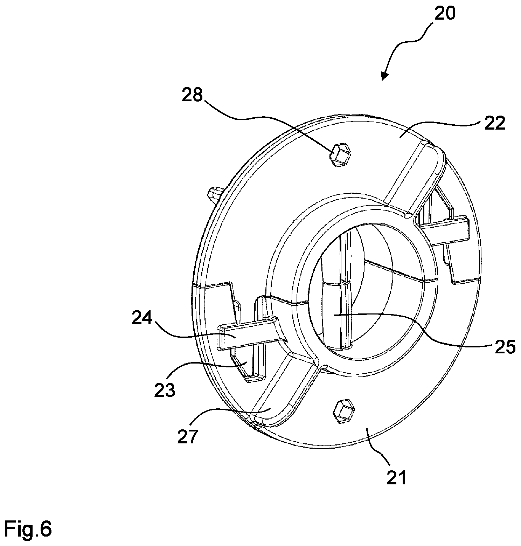

Alternativ zur dargestellten Ausführungsform ist eine besonders kostengünstige Variante des Rührelementes 20 erreicht, wenn die einzelnen sektorförmigen Abschnitte 21, 22 gleichartig oder identisch ausgebildet sind, wie in der Fig. 6 gezeigt. Hierbei weist ein erster sektorförmiger Abschnitt 21 an einem ersten Ende ein Halteelement 24 und auf einem zweiten Ende einen Rasthaken 23 auf. Der zweite sektorförmige Abschnitt 22 ist hierbei identisch zum ersten sektorförmigen Abschnitt 21 ausgebildet. Der Ratshaken 23 des ersten sektorförmigen Abschnittes 21 greift formschlüssig in das Halteelement 24 des zweiten sektorförmigen Abschnittes 22.

### Bezugszeichenliste

- 10: Vorratsbehälter
- 11: Auslaufbereich
- 12: Dosierorgan
- 13: Förderleitung
- 14: Rühreinrichtung
- 15: Rührwelle
- 16: Bohrung
- 20: Rührelement
- 21: erster sektorförmiger Abschnitt
- 22: zweiter sektorförmiger Abschnitt
- 23: Rasthaken
- 24: Halteelement
- 25: Fixierelement
- 26: Filmscharnier
- 27: Formelement
- 28: Ausschnitt
- 30: Rührhilfsmittel

- F: Fahrtrichtung

## Patentansprüche

1. Verteilmaschine, insbesondere landwirtschaftliche Verteilmaschine, zum Ausbringen von granularem Material, insbesondere Saatgut und/oder Düngemittel, umfassend zumindest einen Vorratsbehälter (10) zur Bevorratung des auszubringenden Materials, zumindest einen im unteren Bereich des Vorratsbehälters (10) angeordneten Auslaufbereich (11) mit zumindest einer rotierend angetriebenen innerhalb des Vorratsbehälters (10) angeordneten Rühreinrichtung (14), wobei die Rühreinrichtung (14) zumindest eine Rührwelle (15) und zumindest ein, vorzugsweise als scheibenförmig ausgebildetes, Rührelement (20) umfasst, und wobei das Rührelement (20) vorzugsweise drehfest an der Rührwelle (15) angeordnet ist, wobei das Rührelement (20) mehrteilig, vorzugsweise zweiteilig, ausgebildet ist und das Rührelement (20) die Rührwelle (15) zumindest teilweise, vorzugsweise vollständig, umschließt, **dadurch gekennzeichnet, dass** das Rührelement (20) aus mehreren sektorförmigen, vorzugsweise kreisringsektorförmigen, Abschnitten (21, 22) ausgebildet ist, wobei zumindest ein sektorförmiger Abschnitt (21, 22) zumindest in einem seiner Endbereiche zumindest einen flexiblen und einem anderen sektorförmigen Abschnitt (21, 22) zusammenwirkenden Rasthaken (23) aufweist.

2. Verteilmaschine nach Anspruch 1, **dadurch gekennzeichnet, dass** zumindest ein Ende eines ersten sektorförmigen Abschnittes (21, 22) mit zumindest einem Ende eines zweiten sektorförmigen Abschnittes (21, 22) zumindest teilweise zu der Bildung des Rührelementes (20) verbunden ist.

3. Verteilmaschine nach zumindest einem der vorgenannten Ansprüche,
**dadurch gekennzeichnet, dass** zur Bildung des Rührelementes (20) zumindest ein erster sektorförmigen Abschnitt (21, 22) scharnierartig mit zumindest einem zweiten sektorförmigen Abschnitt (21, 22) verbunden ist.

4. Verteilmaschine nach zumindest einem der vorgenannten Ansprüche,
**dadurch gekennzeichnet, dass** zumindest einer der sektorförmigen Abschnitte (21, 22) die das Rührelement (20) bilden zumindest ein Fixierelement (25) aufweist.

5. Verteilmaschine nach Anspruch 4, **dadurch gekennzeichnet, dass** der sektorförmige Abschnitt (21, 22) zumindest ein erstes und ein zweites Ende aufweist, wobei das Fixierelement (25) mittig zwischen dem ersten und dem zweiten Ende angeordnet ist.

6. Verteilmaschine nach zumindest einem der vorgenannten Ansprüche 4 - 5, **dadurch gekennzeichnet, dass** die Rührwelle (15) zumindest eine Bohrung (16) aufweist, wobei das Fixierelement (25) und die Bohrung (16) zum formschlüssigen ineinandergreifen ausgebildet sind.

7. Verteilmaschine nach zumindest einem der vorgenannten Ansprüche,
**dadurch gekennzeichnet, dass** das Rührelement (20) zumindest ein axial, vorzugsweise seitlich, angeordnetes Formelement (27) aufweist.

8. Verteilmaschine nach zumindest einem der vorgenannten Ansprüche,
**dadurch gekennzeichnet, dass** das Rührelement (20) zumindest einen Ausschnitt (28) aufweist, dass das Rührelement (20) dazu eingerichtet ist, mittels des zumindest einen Ausschnittes (28) ein Rührhilfsmittel (30) aufzunehmen.

9. Verteilmaschine nach zumindest einem der vorgenannten Ansprüche,
**dadurch gekennzeichnet, dass** das Rührelement (20) aus gleichartigen oder identischen Teilen gebildet ist.

## Claims

1. Distributing machine - in particular, an agricultural distributing machine - for dispensing granular material - in particular, seed and/or fertilizer - comprising at least one storage container (10) for storing the material to be dispensed, at least one outlet region (11), which is arranged in the lower region of the storage container (10) and has at least one, rotatably-driven agitating device (14) arranged inside the storage container (10), wherein the agitating device (14) comprises at least one agitator shaft (15) and at least one, preferably disk-shaped, agitator element (20), and wherein the agitator element (20) is arranged in a preferably rotationally-secure manner on the agitator shaft (15), wherein the agitator element (20) has a multi-part - preferably, two-part - design, and the agitator element (20) encloses the agitator shaft (15) at least partially - preferably, completely - **characterized in that** the agitator element (20) is constructed of several sector-shaped - preferably, circular sector-shaped - segments (21, 22), wherein at least one, sector-shaped segment (21, 22) has, at least in one of its end regions, at least one, flexible latching hook (23) cooperating with another sector-shaped segment (21, 22).

2. Distributing machine according to claim 1, **characterized in that** at least one end of a first, sector-shaped segment (21, 22) is connected to at least one end of a second, sector-shaped segment (21, 22) at least partially for the formation of the agitator element (20).

3. Distributing machine according to at least one of the preceding claims, **characterized in that,** to form the agitator element (20), at least a first, sector-shaped segment (21, 22) is connected in a hinge-like fashion to at least one, second, sector-shaped segment (21, 22).

4. Distributing machine according to at least one of the preceding claims, **characterized in that** at least one of the sector-shaped segments (21, 22) forming the agitator element (20) has at least one fixing element (25).

5. Distributing machine according to claim 4, **characterized in that** the sector-shaped segment (21, 22) has at least a first and a second end, wherein the fixing element (25) is arranged centrally between the first and the second ends.

6. Distributing machine according to at least one of the preceding claims 4 - 5, **characterized in that** the agitator shaft (15) has at least one bore (16), wherein the fixing element (25) and the bore (16) are designed for positive interlocking.

7. Distributing machine according to at least one of the preceding claims, **characterized in that** the agitator element (20) has at least one form element (27) arranged axially, and preferably laterally.

8. Distributing machine according to at least one of the preceding claims, **characterized in that** the agitator element (20) has at least one cutout (28), and that the agitator element (20) is configured to accommodate an agitating means (30) by means of the at least one cutout (28).

9. Distributing machine according to at least one of the preceding claims, **characterized in that** the agitator element (20) is formed from similar or identical parts.

## Revendications

1. Machine d'épandage, en particulier machine d'épandage agricole, pour la décharge de matière granulaire, en particulier de semences et/ou d'engrais, comprenant au moins un réservoir de stockage (10) pour le stockage de la matière granulaire, au moins une zone de sortie (11) disposée dans la zone inférieure du réservoir de stockage (10) avec au moins un agitateur (14) disposé entraîné en rotation à l'intérieur du réservoir de stockage (10), dans laquelle l'agitateur (14) comprend au moins un arbre d'agitateur (15) et au moins un élément d'agitateur (20), de préférence conçu en forme de disque et dans laquelle l'élément d'agitateur (20) est de préférence disposé solidaire en rotation sur l'arbre d'agitateur (15), dans laquelle l'élément d'agitateur (20) est conçu en plusieurs parties, de préférence en deux parties et l'élément d'agitateur (20) en outre l'arbre d'agitateur (15) au moins partiellement, de préférence totalement, **caractérisée en ce que** l'élément d'agitateur (20) est conçu à partir de plusieurs sections (21, 22) en forme de secteur, de préférence en forme de secteur angulaire, dans laquelle au moins une section en forme de secteur (21, 22) présente au moins dans une de ses zones d'extrémité au moins un crochet d'encliquetage (23) flexible et coopérant avec une autre section en forme de secteur (21, 22).

2. Machine d'épandage selon la revendication 1, **caractérisée en ce qu'au** moins une extrémité d'une première section en forme de secteur (21, 22) est reliée avec au moins une extrémité d'une deuxième section en forme de secteur (21, 22) au moins partiellement pour la formation de l'élément d'agitateur (20).

3. Machine d'épandage selon au moins l'une des revendications précédentes, **caractérisée en ce que** pour la formation de l'élément d'agitateur (20), au moins une première section en forme de secteur (21, 22) est reliée par charnière avec au moins une deuxième section en forme de secteur (21, 22).

4. Machine d'épandage selon au moins l'une des revendications précédentes, **caractérisée en ce qu'**au moins une des sections en forme de secteur (21, 22) qui forment l'élément d'agitateur (20) présente au moins un élément de fixation (25).

5. Machine d'épandage selon la revendication 4, **caractérisée en ce que** la section en forme de secteur (21, 22) présente au moins une première et une seconde extrémité, dans laquelle l'élément de fixation (25) est disposé au milieu entre la première et la seconde extrémité.

6. Machine d'épandage selon au moins l'une des revendications précédentes 4 - 5, **caractérisée en ce que** l'arbre d'agitateur (15) présente au moins un alésage (16), dans laquelle l'élément de fixation (25) et l'alésage (16) sont conçus pour venir en prise l'un dans l'autre par complémentarité de formes.

7. Machine d'épandage selon au moins l'une des revendications précédentes, **caractérisée en ce que** l'élément d'agitateur (20) présente au moins un élément de moule (27) disposé axialement, de préférence latéralement.

8. Machine d'épandage selon au moins l'une des revendications précédentes, **caractérisée en ce que** l'élément d'agitateur (20) présente au moins un renfoncement (28), **en ce que** l'élément d'agitateur (20) est conçu pour recevoir un moyen auxiliaire d'agitation (30) au moyen de l'au moins un renfoncement (28).

9. Machine d'épandage selon au moins l'une des revendications précédentes, **caractérisée en ce que** l'élément d'agitateur (20) est formé de parties identiques ou similaires.
